# EUROPEAN PATENT APPLICATION

(11) **EP 2 479 657 A1**
(43) Date of publication of application: **25.07.2012**
(21) Application number: 11006294.0
(22) Date of filing: 29.07.2011
(51) Int. Cl.: G06F 3/048

(54) **Mobile terminal and display controlling method thereof**

(30) Priority: 25.01.2011 KR 20110007231
(71) Applicant: LG Electronics Inc., Seoul 150-721 (KR)
(72) Inventor: Kim, Miyoung, Seoul 153-801 (KR); Hong, Kyungah, Seoul 153-801 (KR); Lee, Kunho, Seoul 153-801 (KR); Song, Yoomee, Seoul 153-801 (KR)
(74) Representative: Gunzelmann, Rainer

(57) **Abstract**

A mobile terminal and display controlling method thereof are disclosed, by which item identifiers of various types can be displayed on a single screen in a manner of increasing the number of item identifiers displayable on the single screen. The present invention includes displaying at least one item identifier including a plurality of facets on each of a plurality of lines, receiving an input of a touch & drag action on a specific one of a plurality of the lines, and changing the item identifier displayed on the specific line in accordance with the input of the touch & drag action,

## Description

### BACKGROUND OF THE INVENTION

### Field of the Invention

The present invention relates to a mobile terminal, and more particularly, to a mobile terminal and display controlling method thereof. Although the present invention is suitable for a wide scope of applications, it is particularly suitable for displaying a plurality of item identifiers on a screen.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support and increase of the terminal functions, it may be able to consider the improvement of structural part and/or software part of the terminal

When a general mobile terminal displays an item identifier on a single screen, it is able to display the limited number of item identifiers or item identifiers of the same type.

As the number and types of items increase, it is necessary to increase the number of item identifiers displayed on a single screen. And, it is also necessary to display items of a plurality of types on a single screen. However, a method of satisfying the above-described necessity has not been provided yet.

### SUMMARY OF THE INVENTION

Accordingly, the present invention is directed to a mobile terminal and display controlling method thereof that substantially obviate one or more problems due to limitations and disadvantages of the related art.

An object of the present invention is to provide a mobile terminal and display controlling method thereof, by which item identifiers of various types can be displayed on a single screen in a manner of increasing the number of item identifiers displayable on the single screen.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a touchscreen displaying at least one item identifier including a plurality of facets on each of a plurality of lines, the touchscreen receiving an input of a touch & drag action on a specific one of a plurality of the lines and a controller changing the item identifier displayed on the specific line in accordance with the input of the touch & drag action. Moreover, the item identifier is arranged in a manner that a specific one of a plurality of the facets configuring the item identifier faces forward and an identification information of a corresponding item is displayed on the specific facet.

In another aspect of the present invention, a method of controlling a display in a mobile terminal according to the present invention includes the steps of displaying at least one item identifier including a plurality of facets on each of a plurality of lines, receiving an input of a touch & drag action on a specific one of a plurality of the lines, and changing the item identifier displayed on the specific line in accordance with the input of the touch & drag action. Moreover, the item identifier is arranged in a manner that a specific one of a plurality of the facets configuring the item identifier faces forward and an identification information of a corresponding item is displayed on the specific facet.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2 is front diagram of a mobile terminal according to one embodiment of the present invention for explaining one operational status of the mobile terminal;

FIG. 3 is a flowchart for a method of controlling a display in a mobile terminal according to one embodiment of the present invention;

FIG. 4A and FIG. 4B are diagrams for displaying a menu list for an item identifier display according to the present invention;

FIGs. 5A to 5D are diagrams of item identifiers according to the present invention;

FIG. 6A and FIG. 6B are diagrams for displaying an item identifier indicating an application by a shelf scheme according to the present invention;

FIG. 7A and FIG. 7B are diagrams for displaying an item identifier indicating a content by a shelf scheme according to the present invention;

FIG. 8A and FIG. 8B are diagrams for displaying an item identifier indicating a data by a shelf scheme according to the present invention;

FIG. 9A and FIG. 9B are diagrams for displaying an item identifier indicating a user favorite item by a shelf scheme according to the present invention;

FIGs. 10A to 10C are diagrams for changing an item identifier displayed on a specific line in the course of displaying item identifiers indicating applications according to the present invention;

FIG. 11A and FIG. 11B are diagrams for changing a page in the course of displaying item identifiers indicating applications according to the present invention;

FIGs. 12A to 12D are diagrams for changing an item identifier displayed on a specific line in the course of displaying item identifiers indicating contents according to the present invention;

FIGs. 13A to 13D are diagrams for changing an item identifier displayed on a specific line in the course of displaying item identifiers indicating data according to the present invention;

FIG. 14A and FIG. 14B are diagrams for changing an item identifier displayed on a specific line in the course of displaying item identifiers indicating user-preferred items according to the present invention;

FIGs. 15A to 15F are diagrams for performing an editing action on a plurality of item identifiers or corresponding items selected by a user according to the present invention; and

FIGs. 16A to 16C are diagram for controlling a display of an item identifier by a user manipulation according to the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

The suffixes 'module' and 'unit' for the elements used in the following description are given or used in common by considering facilitation in writing this disclosure only but fail to have meanings or roles discriminated from each other.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except a case applicable to a mobile terminal only, it is apparent to those skilled in the art that the configurations according to an embodiment described in this disclosure is applicable to such a stationary terminal as a digital TV, a desktop computer and the like.

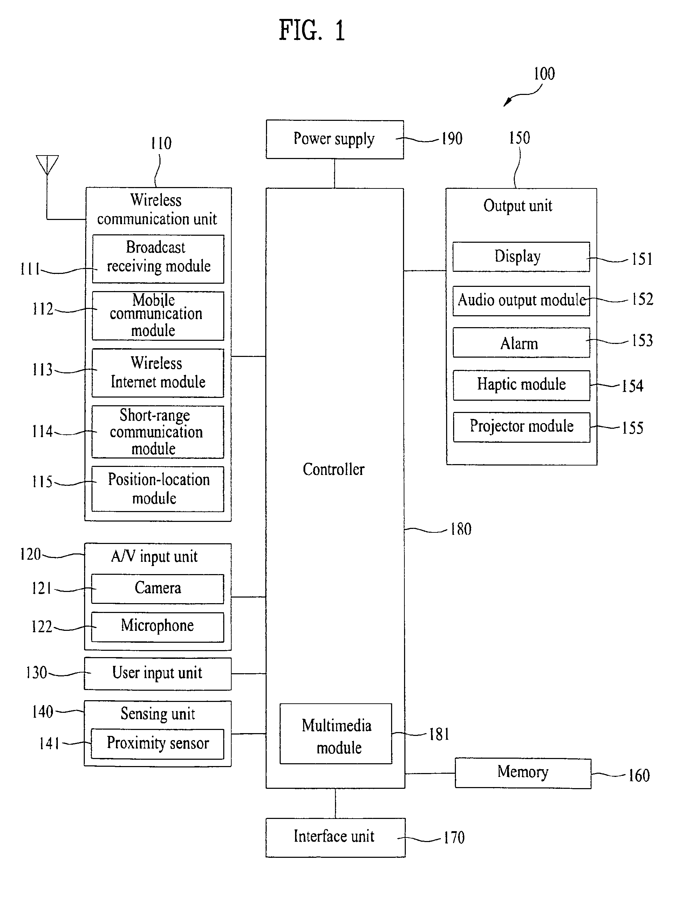

FIG. 1 is a block diagram of a mobile terminal according to one embodiment of the present invention.

Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display unit 151, an audio output module 152, an alarm unit 153, a haptic module 154, a projector module 155 and the like.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display unit 151 can be implemented in the optical transmittive type as well. In this configuration, a user is able to see an object in rear of a terminal body via the area occupied by the display unit 151 of the terminal body.

At least two display units 151 can be provided to the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

In case that the display unit 151 and a sensor for detecting a touch action (hereinafter called 'touch sensor') configures a mutual layer structure (hereinafter called 'touchscreen'), it is able to use the display unit 151 as an input device as well as an output device. In this case, the touch sensor can be configured as a touch film, a touch sheet, a touchpad or the like.

The touch sensor can be configured to convert a pressure applied to a specific portion of the display unit 151 or a variation of a capacitance generated from a specific portion of the display unit 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display unit 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

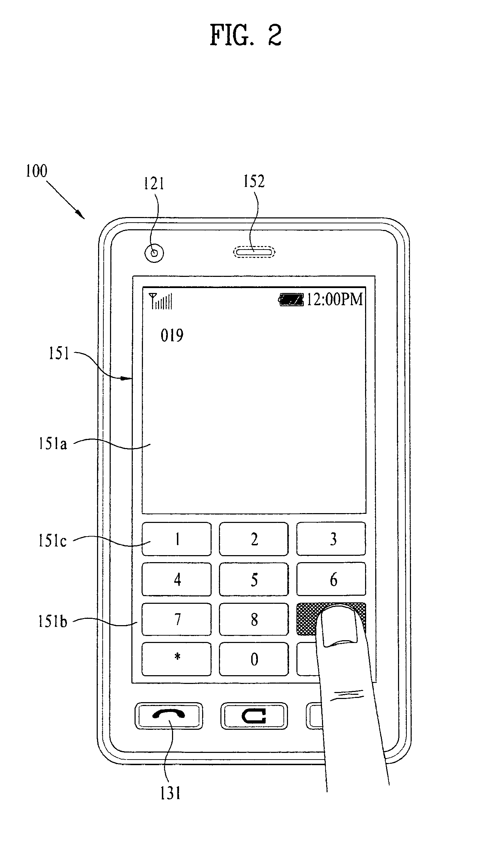

Interconnected operational mechanism between the display unit 151 and the touchpad (not shown) is explained with reference to FIG. 2 as follows.

FIG. 2 is front-view diagram of a terminal according to one embodiment of the present invention for explaining an operational state thereof.

First of all, various kinds of visual information can be displayed on the display unit 151. And, theses information can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be socalled 'soft keys'.

FIG. 2 shows that a touch applied to a soft key is inputted through a front face of a terminal body.

The display unit 151 is operable through an entire area or by being divided into a plurality of regions. In the latter case, a plurality of the regions can be configured interoperable.

For instance, an output window 151a and an input window 151b are displayed on the display unit 151. A soft key 151c representing a digit for inputting a phone number or the like is outputted to the input window 151b. If the soft key 151c is touched, a digit corresponding to the touched soft key is outputted to the output window 151a. If the first manipulating unit 131 is manipulated, a call connection for the phone number displayed on the output window 151a is attempted.

First of all, a mobile terminal mentioned in the following description can include at least one of the components shown in FIG. 1. And, a touchscreen mentioned in the present specification is one example of the display unit and can be indicated by the same reference number '151'. Moreover, in order to perform a prescribed operation using the components (e.g., touchscreen, wireless communication unit, memory, etc.), the controller 180 is able to control individual operations of the components or interconnecting operations among a plurality of the components.

An item mentioned in the present specification includes at least one of an application, a content and a data and is able to have a corresponding item type. The item is basically stored in the mobile terminal or can be provided by an external server or an external terminal.

In particular, an application is a software program drivable within a mobile terminal. If an application is driven within a mobile terminal, it is able to perform a corresponding function or a corresponding operation. An application is able to configure one item type. And, applications can be categorized into a plurality of item types (e.g., internet, message, call, camera, etc.) in accordance with properties.

A content is able to include such a media file (or a multimedia file) as an audio file, a still image file, a video file, a document file, an animation file and the like. A content is able to configure one item type. And, contents can be categorized into a plurality of item types (e.g., video, still image, audio, document, etc.) in accordance with properties.

A data is an information stored in association with an application. And, the data can include a message substance (associated with a message application), a memo substance (associated with a memo application), a schedule substance (associated with a schedule management application) and the like. A data is able to configure one item type. And, data can be categorized into a plurality of item types (e.g., message, memo, phone number, schedule, etc.) in accordance with properties.

The above example of the item is just exemplary, by which the present invention is non-limited.

An item identifier mentioned in the present specification is a means for indicating an item. The item identifier can include a plurality of facets. And, an identification information of a corresponding identifier can be displayed on one (particularly, a facet facing a front side) of a plurality of the facets. Moreover, an item identifier is able to vary its display pattern (e.g., color, size, arrangement sequence, etc.) in accordance with a type of a corresponding item. In the following description, an item identifier to indicate an application shall be named an application identifier. And, an item identifier to indicate a data shall be named a data identifier.

In the following description, a method of controlling a display in a mobile terminal according to the present invention is explained in detail with reference to the accompanying drawings.

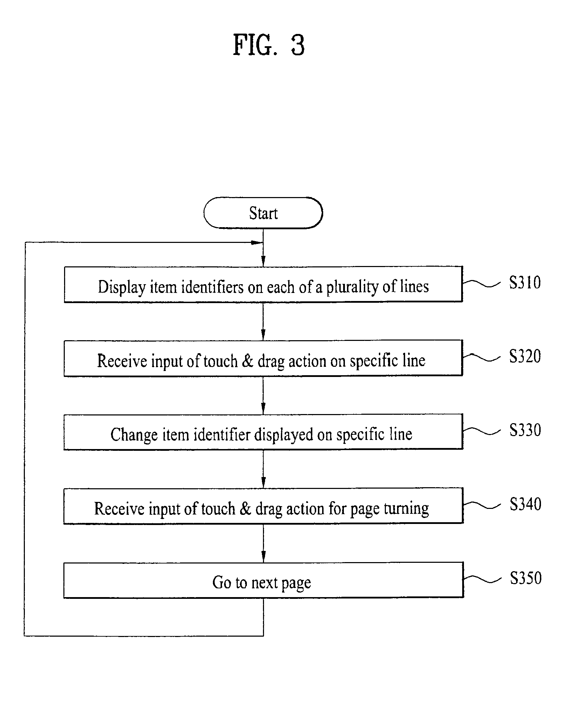

FIG. 3 is a flowchart for a method of controlling a display in a mobile terminal according to one embodiment of the present invention. In particular, FIG. 3 shows a process for controlling an item identifier display.

Referring to FIG. 3, the mobile terminal 100 displays at least one item identifier, which is configured with a plurality of facets on each of a plurality of lines, on the touchscreen 151 [S310].

In the displaying step S310, the mobile terminal 100 displays a plurality of application identifiers in a home screen display state, a plurality of content identifiers in a content search process or a content list view state, or a plurality of data identifiers in a data search process or a data list view state.

In the displaying step S310, the mobile terminal 100 partitions a screen into a plurality of lines and is then able to display a corresponding item identifier on a region corresponding to each of a plurality of the lines. For instance, a plurality of the lines can be represented as a plurality of shelves constructing a bookcase. And, a plurality of the lines can be partitioned in a horizontal or vertical direction.

An item identifier is able to have a size corresponding to at least one of a volume, substance, use frequency and preference of an item corresponding to the item identifier. For instance, it is able to adjust a horizontal length of a facet that faces a front side.

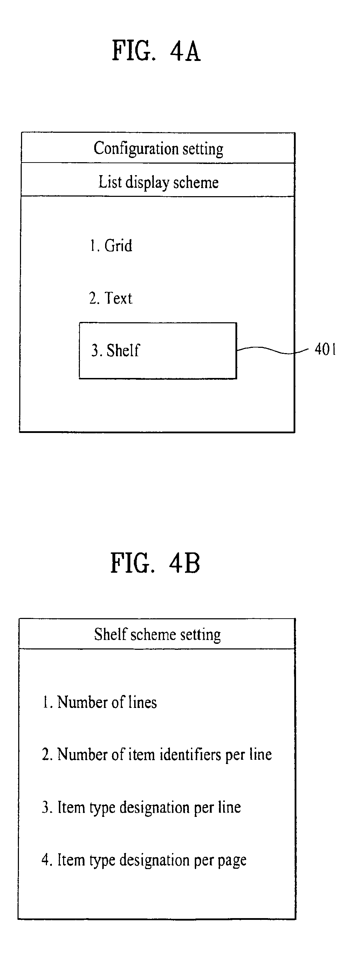

In the following description, a configuration setting for an item identifier display is explained with reference to FIG. 4A and FIG. 4B.

FIG. 4A and FIG. 4B are diagrams for displaying a menu list for an item identifier display according to the present invention.

Referring to FIG. 4A, the mobile terminal 100 is able to set up a display scheme of an item identifier list in accordance with a user selection in a configuration setting state. For instance, the display scheme can include one of a grid scheme, a text scheme, a shelf scheme and the like. In this case, the shelf scheme can mean the scheme of displaying at least one item identifier on each of a plurality of shelves (i.e., example of lines) according to the present invention. In particular, a plurality of the shelves can construct a bookcase. And, one shelf can be divided into a plurality of sub-shelves.

Therefore, if the shelf scheme 401 is selected by a user in FIG. 4A, the mobile terminal is able to display an item identifier by the shelf scheme. Moreover, the mobile terminal 100 is able to set up a display scheme per item type (e.g., shelf scheme for application type, grid scheme for content type, text scheme for data type, etc.) in accordance with a user selection. And, item type can include one of an application type, a content type and a data type.

Referring to FIG. 4B, in case of setting an item identifier display scheme to a shelf scheme, the mobile terminal 100 is able to set up a detailed display condition for the shelf scheme in accordance with a user selection.

In particular, if 'number of lines (or number of shelves)' is selected, the mobile terminal 100 is able to set the number of lines to be included in a single screen, the number of lines per page, or the number and position of sublines to be included in one line.

If 'number of item identifiers per line' is selected, the mobile terminal 100 is able to set the number of item identifiers to be displayed on one line collectively or per line or is able to set the number item identifiers per line for each item type. For instance, the mobile terminal 100 sets 10 item identifiers to be displayed on all lines collectively. For another instance, the mobile terminal 100 is able to set the number (e.g., 10, 7, 9, etc.) of item identifiers, which will be displayed, for each line.

If 'designation of item type per line' is selected, the mobile terminal 100 is able to set a corresponding item type per line. For instance, in case that a plurality of lines are included in one screen, a first line is set to an application type, a second line is set to a content type, and a third line is set to a data type. In particular, in case that an application type is classified into a plurality of types, a first line is set to a message type, a second line is set to an internet type, and a third line is set to a camera type.

If 'designation of item type per page' is selected, the mobile terminal 100 is able to set a corresponding item type per page. For instance, assuming that a plurality of pages are displayable, a first page is set to an application type, a second page is set to a content type, and a third page is set to a data type.

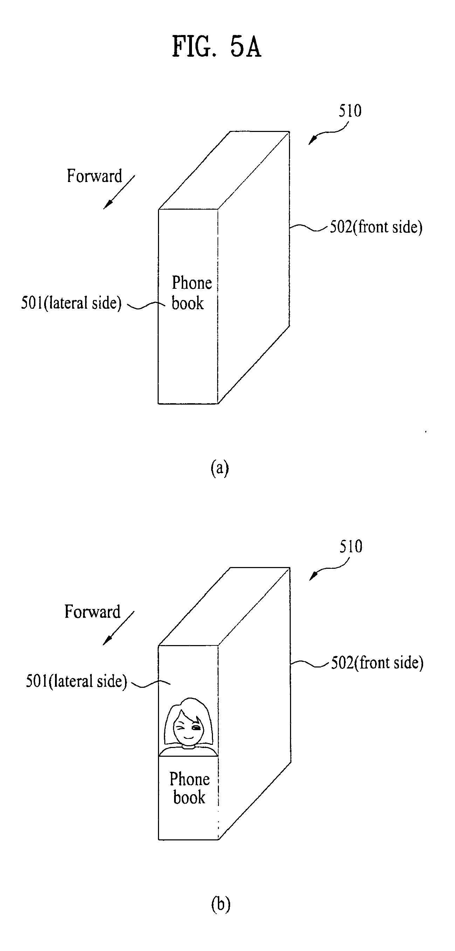

In the following description, an item identifier is explained in detail with reference to FIGs. 5A to 5D.

As mentioned in the foregoing description, an item identifier can include a plurality of facets and an identification information of a corresponding item on the facet facing forward. Occasionally, an identification information of a corresponding item can be displayed on another facet instead of the face facing forward. The following description is made on the assumption that an item identifier is a hexahedron. In particular, it is able to imagine a shape that an item identifier of a book shape is put on a bookcase including a plurality of shelves.

For clarity and convenience of the following description, an item identifier can be limited to a phonebook (i.e., example of application) identifier.

FIGs. 5A to 5D are diagrams of item identifiers according to the present invention.

Referring to FIG. 5A, a lateral side 501 of a phonebook identifier 510 is able to face forward (e.g., a lateral side having a book title printed thereon in case of a book). And, a name of a phonebook is displayed on the lateral side 501 [FIG. 5A (a)] or a representative image and name can be displayed on the lateral side 501 [FIG. 5A (b)].

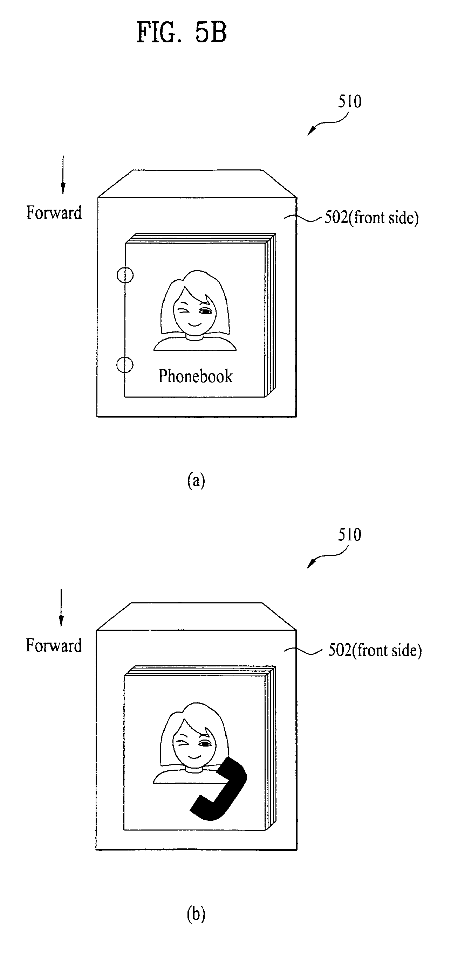

Referring to FIG. 5B, a front side 502 of a phonebook identifier 510 is able to face forward (e.g., a front side having a book title printed thereon in case of a book). And, a representative image and name of a phonebook are displayed on the front side 502 [FIG. 5B (a)] or a representative image can be displayed on the front side 502 [FIG. 5B (b)].

In this case, identification information displayed on the front side can be presented more diversely or in further detail rather than displayed on the lateral side. This is because a display region of the front side is wider than that of the lateral side. And, the identification information to be displayed on the lateral or front side can be determined by a user or the controller 180.

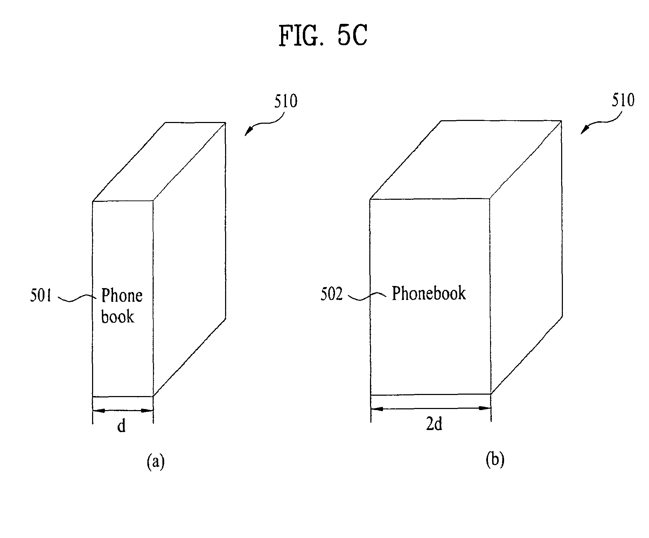

Referring to FIG. 5C, a size or volume of a phonebook identifier 510 can be determined in accordance with a size of counterpart information stored in a phonebook, the number of counterpart informations, a user's use frequency/preference for the phonebook and/or the like. For instance, since a length of a lateral side 501 shown in FIG. 5C (a) is one half of a length of a lateral side shown in FIG. 5C (b), the size of the counterpart information or the number of the counterpart informations shown in FIG. 5C (a) amounts to one half of that shown in FIG. 5C (b).

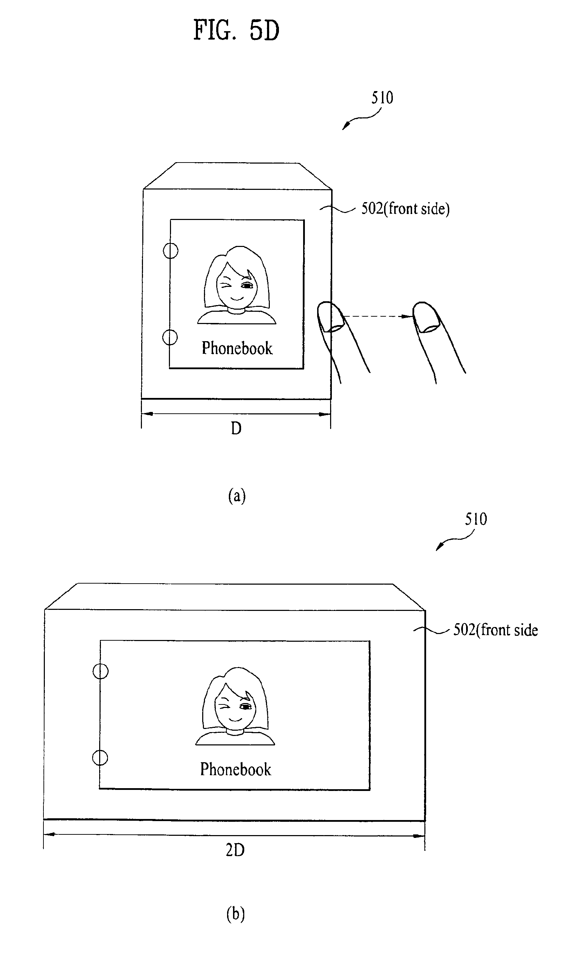

Referring to FIG. 5D, a size or volume of a phonebook identifier 510 is adjustable in accordance with a user selection. For instance, while a front side 502 faces forward, if a touch & drag action is inputted to the tight [FIG. 5D (a)], it is able to increase a width length of the front side 502 to correspond to a distance of the touch & drag. As the width length of the front side 502 is increased, identification can be displayed in further detail on the front side.

Referring now to FIG. 3, in the displaying step S310, the mobile terminal 100 is able to display item identifiers in a manner of classifying the item identifiers per item type under the control of the controller 180. And, the mobile terminal 100 is able to designate pages or lines to a plurality of item types, respectively.

In the following description, a process for displaying item identifiers is explained with reference to the accompanying drawings. For clarity and convenience of the following description, assume that item identifiers are displayed by a shelf scheme.

In the following description, item types for classification can include an application type, a content type, a data type and a user favorite type. And, each of the classification types can include a plurality of sub-classification item types. For instance, the application type can include a message type, a camera type, an internet type and the like. The content type can include an audio type, a photo type, a video type, a document type and the like. And, the data type can include a counterpart information type, a message type, a schedule type and the like. Of course, since the above-enumerated item type species are just exemplary, it is able to classify item types in various ways.

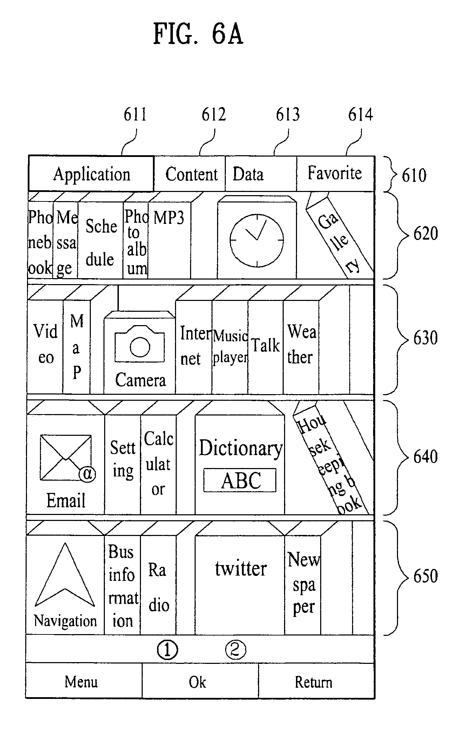

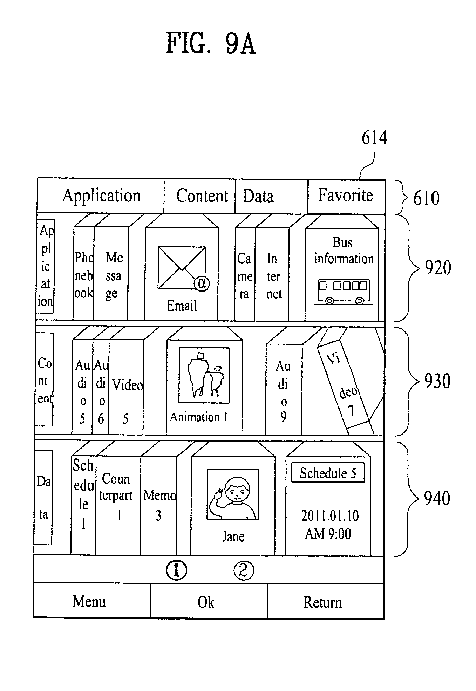

Referring to FIGs. 6A to 9B, a classified item type region 610 is allocated to a prescribed region of a screen. And, sub-regions 611 to 614 respectively corresponding to a plurality of classified item types can be included in the classified item type region 610. The mobile terminal 100 is able to identifiably display the sub-region of the classified item type corresponding to a currently displayed page. If a user selects a specific sub-region, the mobile terminal 100 is able to displays an item identifier corresponding to the classified item type corresponding to the specific sub-region.

Occasionally, the classified item identifier region 610 may not be allocated. Instead of the classified item identifier region 610, it is able to display the classified item identifiers are page indicators (e.g., 0,1, 0,2, 0,3 ...).

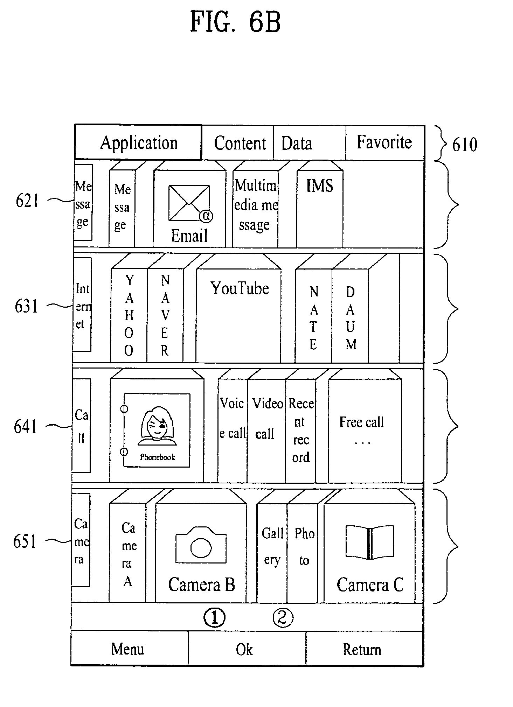

FIG. 6A and FIG. 6B are diagrams for displaying an item identifier indicating an application by a shelf scheme according to the present invention. For clarity and convenience of the following description, assume that sub-classified item types of the application type can include a message type, an internet type, a call type, a camera type and the like.

Referring to FIG. 6A and FIG. 6B, the mobile terminal 100 displays a bookcase including four shelves 620, 630, 640 and 650 and is able to display a plurality of application identifiers on each of the shelves. The application identifiers are displayable across two pages (cf. 0,1 and 0,2 on the bottom side of the screen). And, the indicator 0,1 of a currently display page can be identifiably displayed.

In particular, referring to FIG. 6A, application identifiers are displayed in order without designating a sub-classified item type by shelf. Referring to FIG. 6B, the first to fourth shelves 620, 630, 640 and 640 are set to a message type 621, an internet type 631, a call type 41 and a camera type 651, respectively. And, application identifiers corresponding to the sub-classified item types are displayed on the first to fourth shelves 620, 630, 640 and 640, respectively.

Besides, application identifiers can be freely arranged on each of the shelves in accordance with a user's location designation or can be displayed in a manner of being classified by date, use frequency, application providing source and the like [not shown in the drawing].

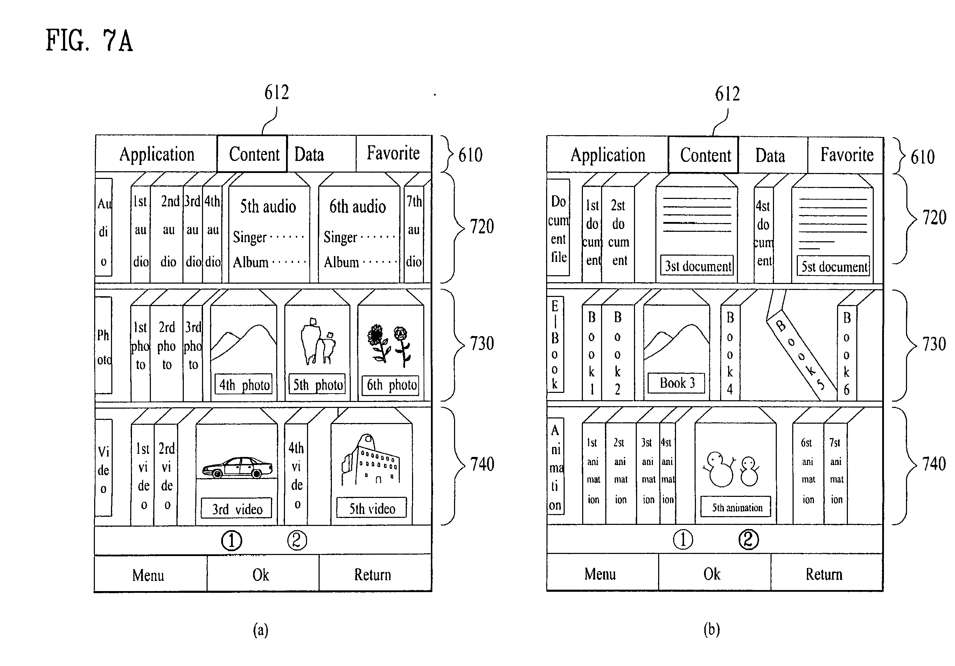

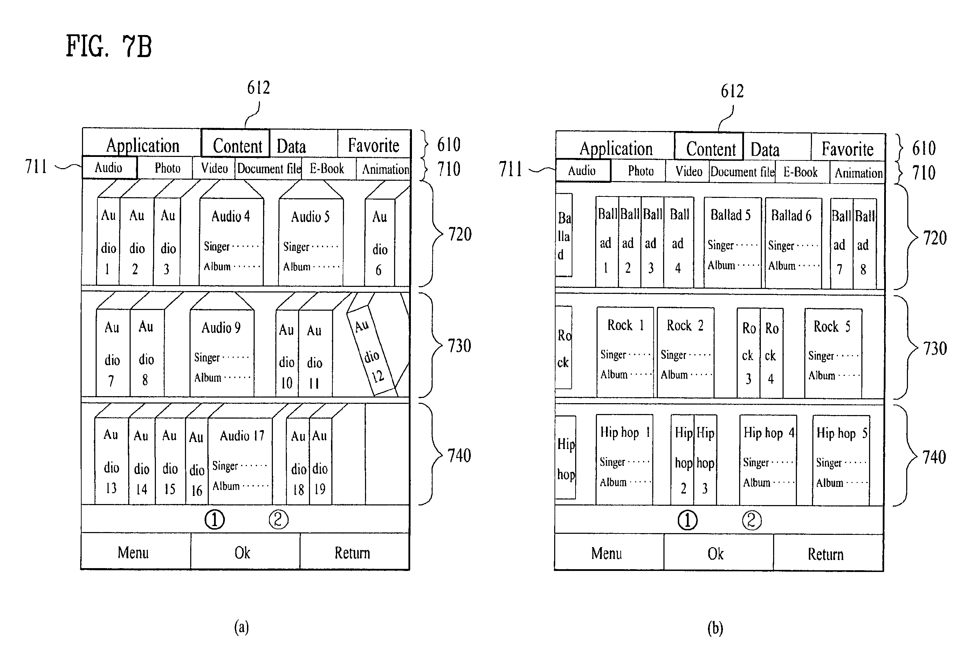

FIG. 7A and FIG. 7B are diagrams for displaying an item identifier indicating a content by a shelf scheme according to the present invention. For clarity and convenience of the following description, assume that the sub-classified item types of the content type can include an audio type, a photo type, a video type, a document type, an e-book type, an animation type and the like.

Referring to FIG. 7A and FIG. 7B, the mobile terminal 100 displays a bookcase including three shelves 720, 730 and 740 and is then able to display a plurality of content identifiers on each of the shelves.

In particular, referring to FIG. 7A, a plurality of the content identifiers corresponding to the audio type, the photo type and the video type are displayed on the first shelf 720, the second shelf 730 and the third shelf 740 of a first page, respectively [FIG. 7A (a)]. And, a plurality of the content identifiers corresponding to the document type, the e-book type and the animation type can be displayed on the first shelf 720, the second shelf 730 and the third shelf 740 of a second page, respectively [FIG. 7A (b)].

In more particular, referring to FIG. 7B, a sub-classified item type region 710 is allocated to a prescribed region of the screen. And, a plurality of sub-regions respectively corresponding to sub-classified item types belonging to the content type can be displayed within the region 710. In particular, the sub-region 711 of the sub-classified item type corresponding to a currently displayed content identifier can be identifiably displayed.

Referring to FIG. 7B, in case that the audio type is selected as the sub-classified item type, all audio files are displayed on the first shelf 720, the second shelf 730 and the third shelf 740 in order [FIG. 7B (a)]. Alternatively, content identifiers can be displayed by genre (e.g., ballad, rock, hip-hop, etc.) on the first shelf 720, the second shelf 730 and the third shelf 740, respectively [FIG. 7B (b)].

Besides, a plurality of content identifiers classified not only by genre but also by such a condition as singer, album, date, user specification and the like can be displayed on each of a plurality of shelves [not shown in the drawing]. For instance, a plurality of content identifiers corresponding to songs of Singer A, songs of Singer B and songs of Singer C can be displayed on the first to third shelves, respectively.

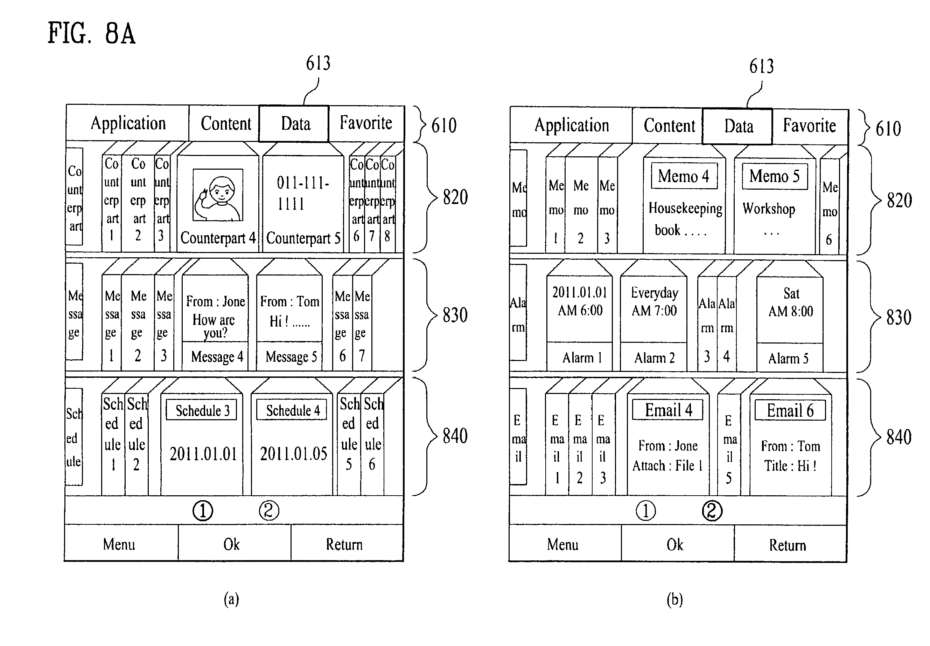

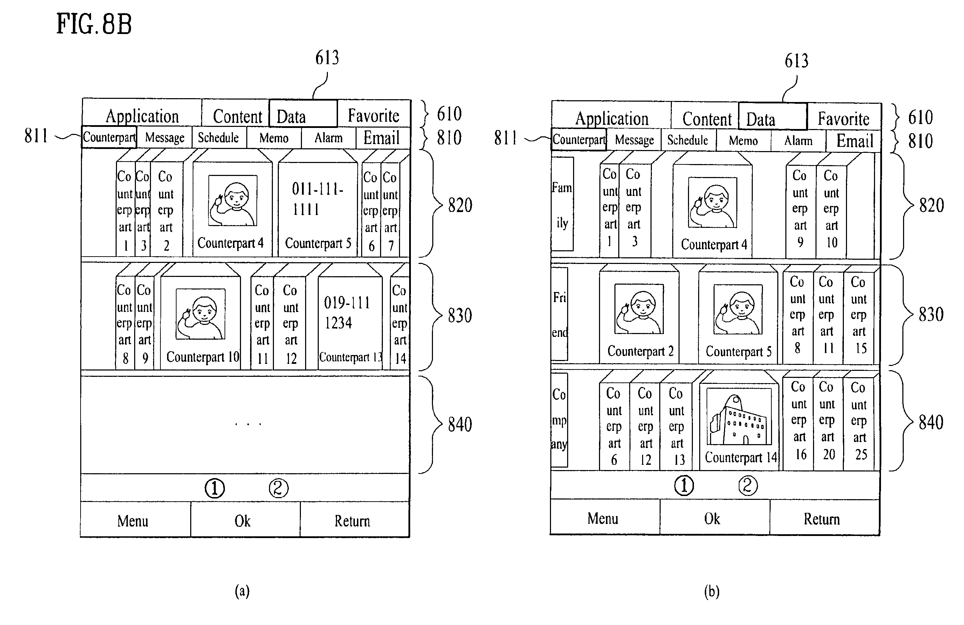

FIG. 8A and FIG. 8B are diagrams for displaying an item identifier indicating a data by a shelf scheme according to the present invention. For clarity and convenience of the following description, assume that sub-classified item types of a data type can include a counterpart information type (e.g., counterpart informations associated with a phonebook application), a message type (e.g., messages associated with a message application), a schedule type (e.g., schedules associated with a schedule management application), a memo type (e.g., memos associated with a memo application), an alarm type (e.g., alarms associated with an alarm application), an email type (e.g., emails associated with an email application) and the like.

Referring to FIG. 8A and FIG. 8B, the mobile terminal 100 displays a bookcase including three shelves 820, 830 and 840 and is then able to display a plurality of data identifiers on each of the shelves.

In particular, referring to FIG. 8A, a plurality of the data identifiers corresponding to the counterpart information type, the message type, the schedule type and the memo type are displayed on the first shelf 820, the second shelf 830 and the third shelf 840 of a first page, respectively [FIG. 8A (a)]. And, a plurality of the data identifiers corresponding to the memo type, the alarm type and the email type can be displayed on the first shelf 820, the second shelf 830 and the third shelf 840 of a second page, respectively [FIG. 8A (b)].

In more particular, referring to FIG. 8B, a sub-classified item type region 810 is allocated to a prescribed region of the screen. And, a plurality of sub-regions respectively corresponding to sub-classified item types belonging to the data type can be displayed within the region 810. In particular, the sub-region 811 of the sub-classified item type corresponding to a currently displayed data identifier can be identifiably displayed.

Referring to FIG. 8B, in case that the counterpart information type is selected as the sub-classified item type, all counterpart informations are displayed on the first shelf 820, the second shelf 830 and the third shelf 840 in order [FIG. 8B (a)]. Alternatively, data identifiers can be displayed by group (e.g., family, friend, company, etc.) on the first shelf 820, the second shelf 830 and the third shelf 840, respectively [FIG. 8B (b)].

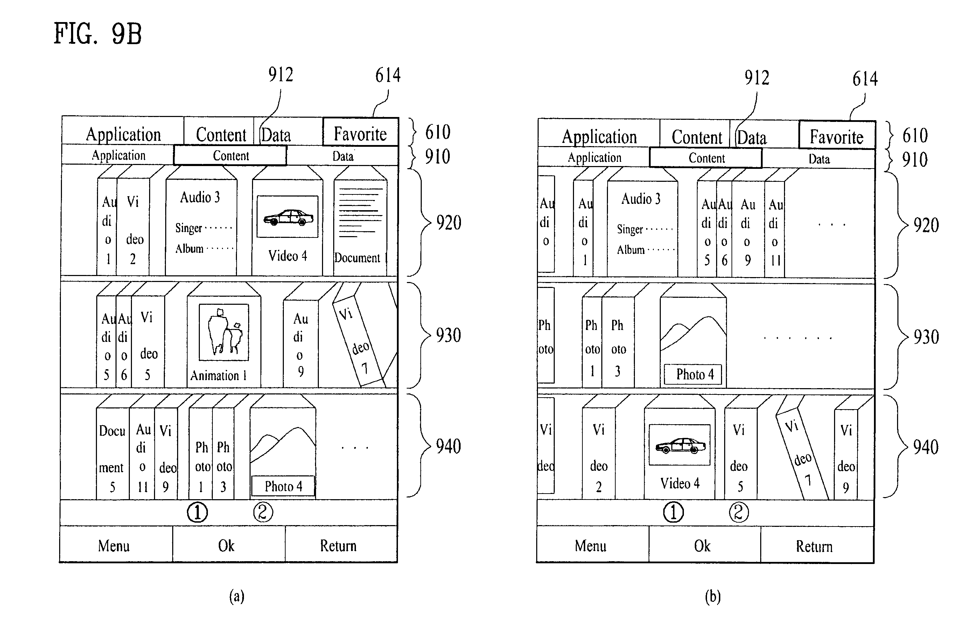

FIG. 9A and FIG. 9B are diagrams for displaying an item identifier indicating a user favorite item by a shelf scheme according to the present invention.

In the drawings, the user favorite item can include an application, a content, a data and the like. The user favorite item is directly designated by a user or can be randomly designated by the controller 180 based on a use frequency for a predetermined period of time.

Referring to FIG. 9A, a plurality of application identifiers corresponding to the application type, a plurality of content identifiers corresponding to the content type and a plurality of data identifiers corresponding to the data type can be displayed on the first shelf 920, the second shelf 930 and the third shelf 940, respectively.

Referring to FIG. 9B, an item type region 910 for displaying an item type (hereinafter named a favorite item type) of an item designated to a user favorite item is allocated to a prescribed region of the screen. And, a plurality of sub-regions corresponding to the favorite item type can be displayed within the region 910. In particular, the sub-region 912 of the favorite item type corresponding to a currently displayed item identifier can be identifiably displayed.

Referring to FIG. 9B, in case that the content type is selected as the favorite item type, content identifiers of all contents designated as the user favorite item are displayed on the first shelf 920, the second shelf 930 and the third shelf 940 in order [FIG. 9B (a)]. Alternatively, content identifiers can be displayed by sub-classification type (e.g., audio type, photo type, video type, etc.) belonging to the content type on the first shelf 920, the second shelf 930 and the third shelf 940, respectively [FIG. 9B (b)].

Referring now to FIG. 3, in the displaying step S310, the mobile terminal 100 receives an input of a touch & drag action on a specific one of a plurality of lines, on which item identifiers are displayed, using the touchscreen 151 [S320] In case of receiving the input of the touch & drag action, the mobile terminal 100 changes the item identifiers displayed on the specific line under the control of the controller 180 [S330].

In particular, the controller 180 is able to perform the item identifier changing process to correspond to a touch direction, a touch speed, a touch distance and/or the like of the touch & drag action.

In the changing step S330, if the mobile terminal 100 receives the input of the touch & drag action, the mobile terminal 100 shifts the item identifiers of a first group displayed on the specific line to correspond to the touch & drag direction and is then able to display the item identifiers of a second group, in which the item identifiers of the first group are included in part or are not included at all, on the specific line.

In this case, the item identifiers of the first or second group can mean at least one item identifier displayed on one line of one screen.

In particular, in case that item identifiers are displayed on each line before the input of the touch & drag action in a manner of differing from each other in item type, the item corresponding to the item identifier of the second group can have the same item type of the item corresponding to the item identifier of the first group.

In particular, in case that item identifiers are displayed on each page before the input of the touch & drag action in a manner of differing from each other in item type, the item corresponding to the item identifier of the second group can have the item type different from that of a page displayed previous to the input of the touch & drag action.

Meanwhile, the mobile terminal 100 receives an input of a touch & drag action for a page turning from a user using the touchscreen 151 [S340].

In doing so, the touch & drag action for the page turning (i.e., a page itself is changed) can be configured to differ from the touch & drag action on the specific line (i.e., the item identifiers displayed on the specific line are changed only) in touch pattern.

For instance, the touch & drag action for the page turning is the touch & drag action performed using a multi-pointer, while the touch & drag action on the specific line is the touch & drag action using a single pointer. For another instance, the touch & drag action for the page turning is requested to be inputted to a specified screen region, while the touch & drag action on the specific line is requested to be inputted to the specific line only.

In case of receiving the input of the touch & drag action for the page turning, the mobile terminal 100 goes to a next page and then displays the item identifiers on each of a plurality of lines included in the next page, under the control of the controller 180 [5350].

For instance, the next page can have an item type equal to (i.e., a page shift within the same time type) or different from (i.e., a page shift differing in item type) that of an item identifier displayed on a previous page. This can be determined in accordance with a touch pattern of the touch & drag action.

This is described in detail with reference to the accompanying drawings as follows.

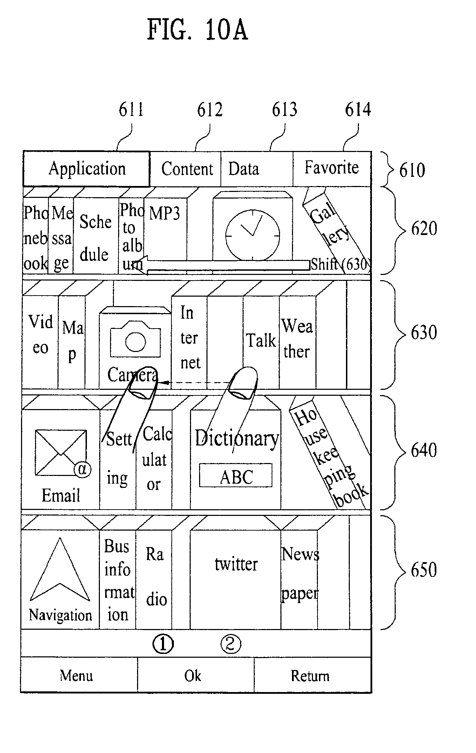

FIGs. 10A to 10C are diagrams for changing an item identifier displayed on a specific line in the course of displaying item identifiers indicating applications according to the present invention.

Referring to FIG. 10A, in the application identifier display state (cf. FIG. 6A), the mobile terminal 100 is able to receive an input of a touch & drag action on the second shelf 630 in a left direction from a user.

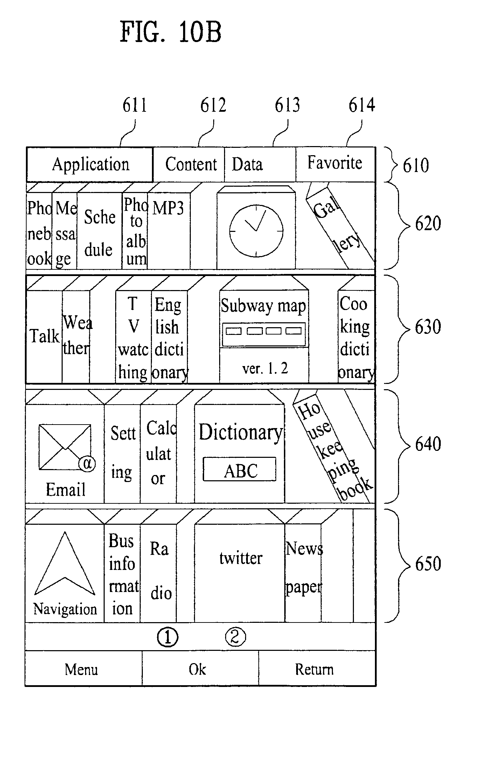

Referring to FIG. 10B, if the mobile terminal 100 receives the input of the touch & drag action in FIG. 10A, the mobile terminal 100 shifts the application identifiers of the first group displayed on the second shelf 630 in the left direction and is then able to display the application identifiers of the second group situated next to the application identifiers of the first group on the second shelf 630.

In doing so, a state of the ongoing shift of the application identifiers of the first and second groups can be displayed to correspond to the input of the touch & drag action. Moreover, some (e.g., talk, weather) of the application identifiers of the first group can be included in the application identifiers of the second group. The application identifiers of the second group can include application identifiers in order farther from the application identifiers of the first group if the touch & drag distance gets greater.

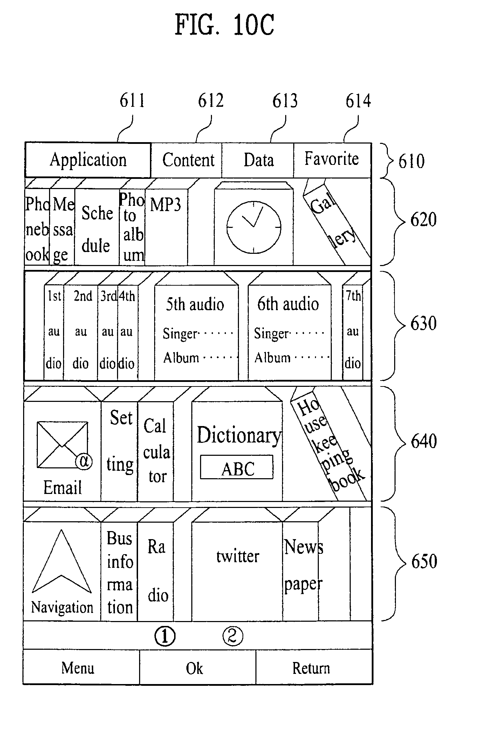

Referring to FIG. 10C, in case of receiving the input of the touch & drag action in FIG. 10A, the mobile terminal shits the application identifiers displayed on the second shelf 630 in the left direction and is then able to display the content identifiers corresponding to the content type, which is the type next to the application type, on the second shelf 630.

In doing so, an item identifier of an item type in order farther from the application type can be included in the second shelf 630 if the touch & drag action distance increases more. For instance, the item order is 'application type, content type, data type and user favorite type'.

Meanwhile, if a touch & drag action in a right direction is inputted, application identifiers can be shifted in the right direction [not shown in the drawing].

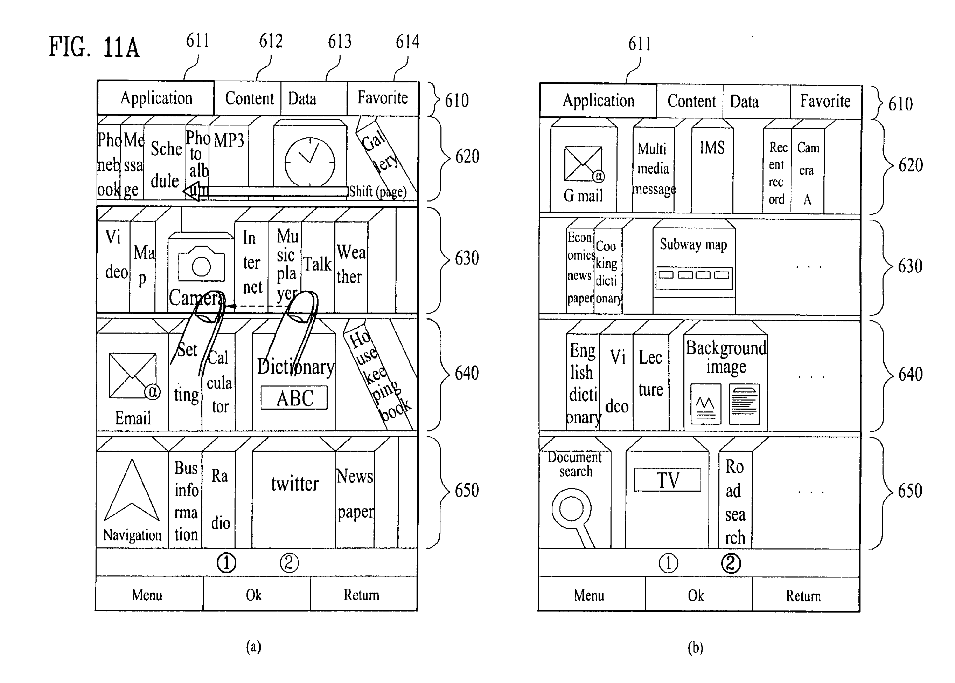

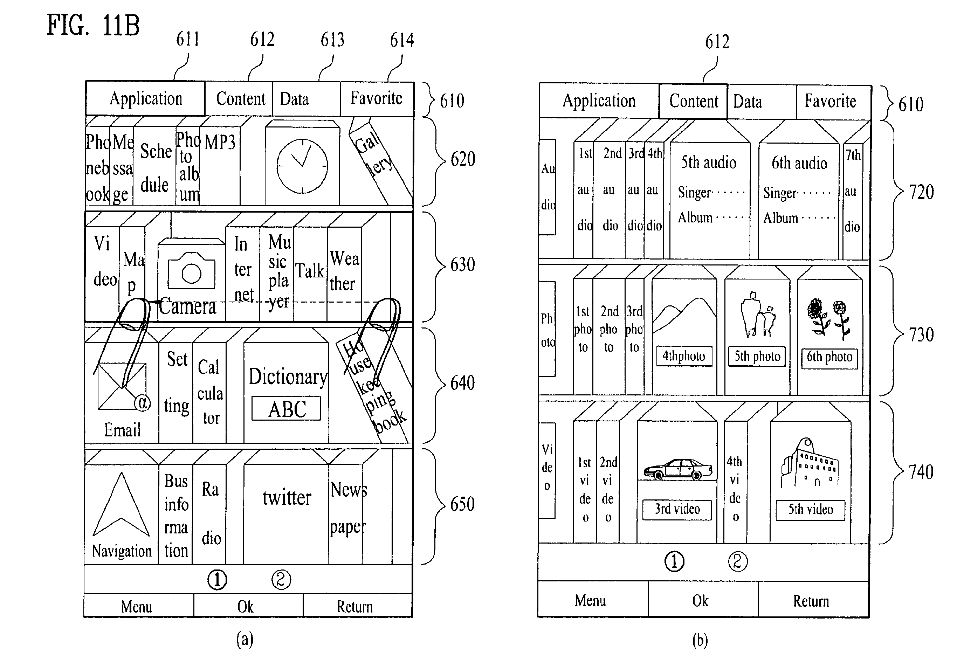

FIG. 11A and FIG. 11B are diagrams for changing a page in the course of displaying item identifiers indicating applications according to the present invention.

Referring to FIG. 11A (a) or FIG. 11B (a), while the application identifiers are displayed [cf. FIG. 6A], the mobile terminal 100 is able to receive an input of a left-directional touch & drag action on the second shelf 630 from a user.

In doing so, it is not mandatory for the touch & drag action to be inputted to the second shelf 630. Alternatively, the touch & drag action can be inputted to any point within the screen.

In order to discriminate this touch & drag action from the former touch & drag action (using the single pointer) for the application identifier shift within the second shelf 630 in FIG. 10A, a touch & drag action can be inputted using a multi-pointer in FIG. 11A (a) or a touch & drag action in a predetermined distance (e.g., a distance from one edge of the screen to another opposed edge of the screen) can be inputted in FIG. 11B (a).

Referring to FIG. 11A (b), if a first page and a second page are allocated to an application type, the mobile terminal 100 goes to the second page and is then able to display application identifiers situated next to the application identifiers displayed on the first page on the second page (i.e., page shift between the same item types).

Referring to FIG. 11B (b), the mobile terminal 100 goes to a page corresponding to a content type situated next to the application type and is then able to display content identifiers on the corresponding page (i.e., page shift between different item types).

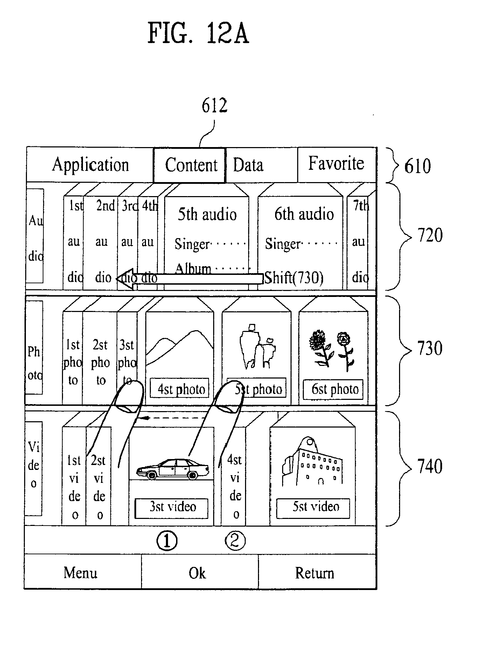

FIGs. 12A to 12D are diagrams for changing an item identifier displayed on a specific line in the course of displaying item identifiers indicating contents according to the present invention.

Referring to FIG. 12A, while contents identifiers are displayed [cf. FIG. 7A (a)], the mobile terminal 100 is able to receive an input of a left-directional touch & drag action on the left shelf 730, on which content identifiers (hereinafter named photo identifiers) of a photo type are displayed, from a user.

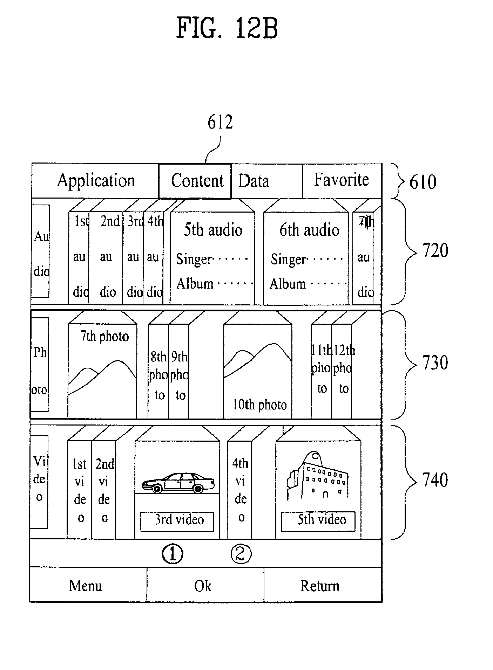

Referring to FIG. 12B, if the mobile terminal 100 receives the input of the touch & drag action in FIG. 12A, the mobile terminal 100 shifts the photo identifiers of a first group displayed on the second shelf 730 in the left direction and is then able to display the photo identifiers of a second group situated next to the photo identifiers of the first group on the second shelf 730 (i.e., identifier change between the same sub-classification types within a line).

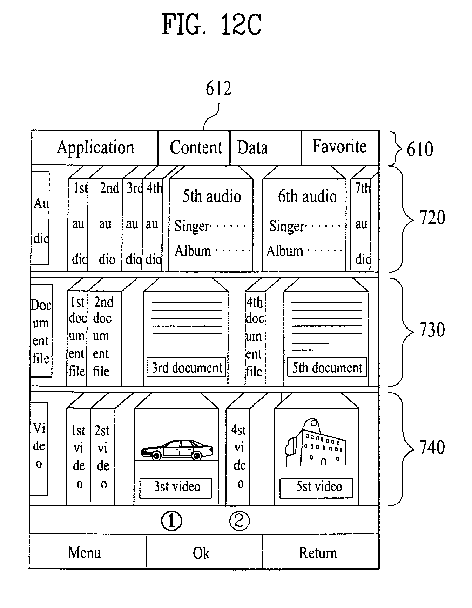

Referring to FIG. 12C, if the mobile terminal 100 receives the input of the touch & drag action in FIG. 12A, the mobile terminal 100 shifts the photo identifiers displayed on the second shelf 730 in the left direction and is then able to display the content identifiers (hereinafter named document identifiers) corresponding to a document type, which is the type next to the photo type, on the second shelf 730 (i.e., identifier change between different sub-classification types within a line).

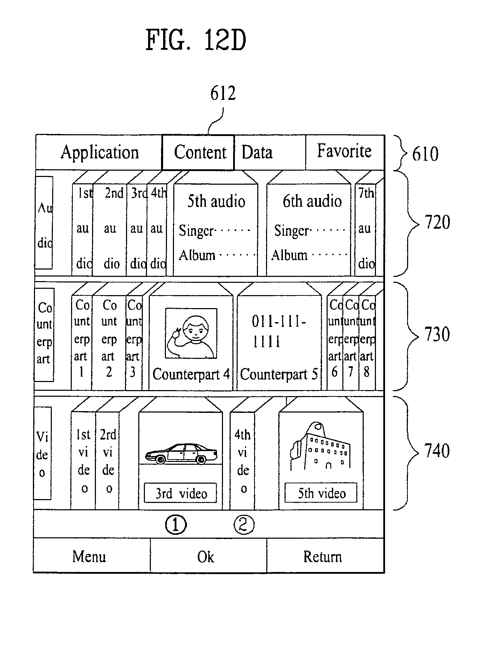

Referring to FIG. 12D, if the mobile terminal 100 receives the input of the touch & drag action in FIG. 12A, the mobile terminal 100 shifts the photo identifiers displayed on the second shelf 730 in the left direction and is then able to display the data identifiers corresponding to a data type, which is the type next to the content type, on the second shelf 730 (i.e., identifier change between different classification types within a line).

In the above description, the touch & drag actions for the changes into the states shown in FIGs. 12B to 12D can differ from each other in the corresponding touch pattern thereof.

Meanwhile, the embodiments (cf. FIG. 11A and FIG. 11B) for the page shift (or page turning) in the application identifier display state are applicable to the content identifier display as well [not shown in the drawing].

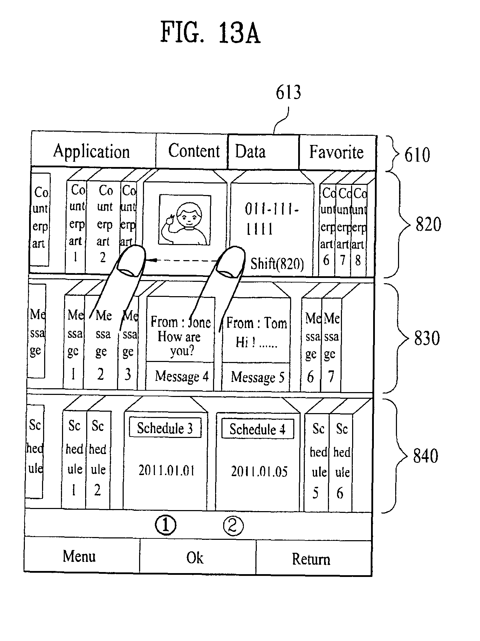

FIGs. 13A to 13D are diagrams for changing a content identifier displayed on a specific line in a data identifier display state according to the present invention.

Referring to FIG. 13A, in the data identifier display state [cf. FIG. 8A (a)], the mobile terminal 100 is able to receive an input of a left-directional touch & drag action on the first shelf 820, on which data identifiers (hereinafter named counterpart identifiers) of a counterpart information type are displayed, from a user.

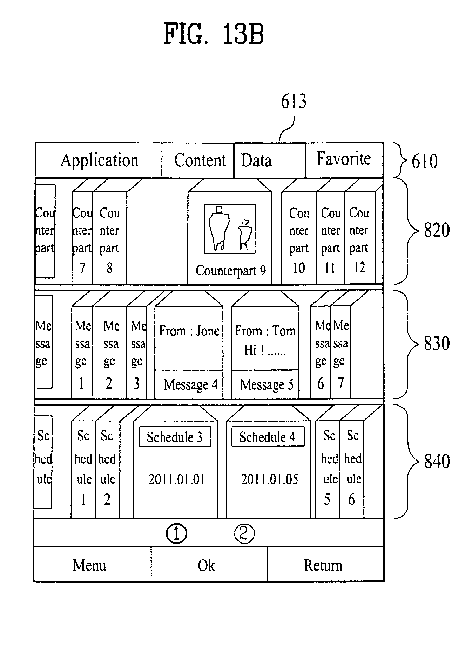

Referring to FIG. 13B, if the mobile terminal 100 receives the input of the touch & drag action in FIG. 13A, the mobile terminal 100 shifts the counterpart identifiers of a first group displayed on the first shelf 820 in the left direction and is then able to display the counterpart identifiers of a second group situated next to the counterpart identifiers of the first group on the first shelf 820 (i.e., identifier change between the same sub-classification types within a line).

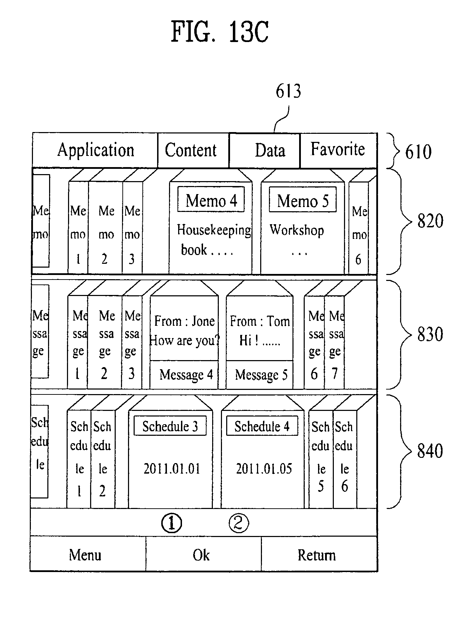

Referring to FIG. 13C, if the mobile terminal 100 receives the input of the touch & drag action in FIG. 13A, the mobile terminal 100 shifts the counterpart identifiers displayed on the first shelf 820 in the left direction and is then able to display the data identifiers (hereinafter named memo identifiers) corresponding to a memo type, which is the type next to the counterpart information type, on the first shelf 820 (i.e., identifier change between different sub-classification types within a line).

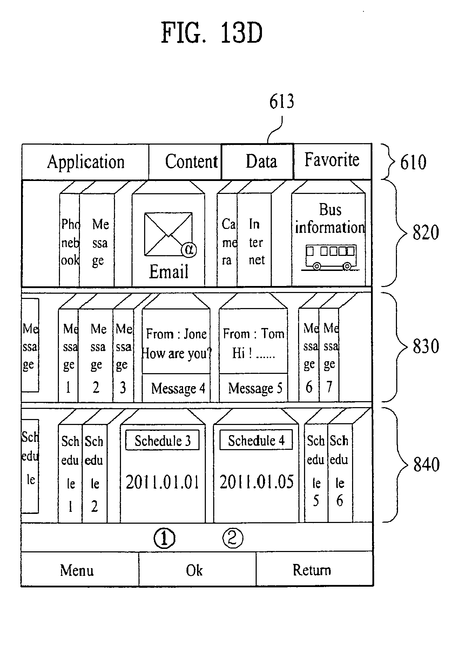

Referring to FIG. 13D, if the mobile terminal 100 receives the input of the touch & drag action in FIG. 13A, the mobile terminal 100 shifts the counterpart identifiers displayed on the first shelf 820 in the left direction and is then able to display the item identifiers corresponding to a user favorite type, which is the type next to the data type, on the first shelf 820 (i.e., identifier change between different classification types within a line).

In the above description, the touch & drag actions for the changes into the states shown in FIGs. 13B to 13D can differ from each other in the corresponding touch pattern thereof.

Meanwhile, the embodiments (cf. FIG. 11A and FIG. 11B) for the page shift (or page turning) in the application identifier display state are applicable to the data identifier display as well [not shown in the drawing].

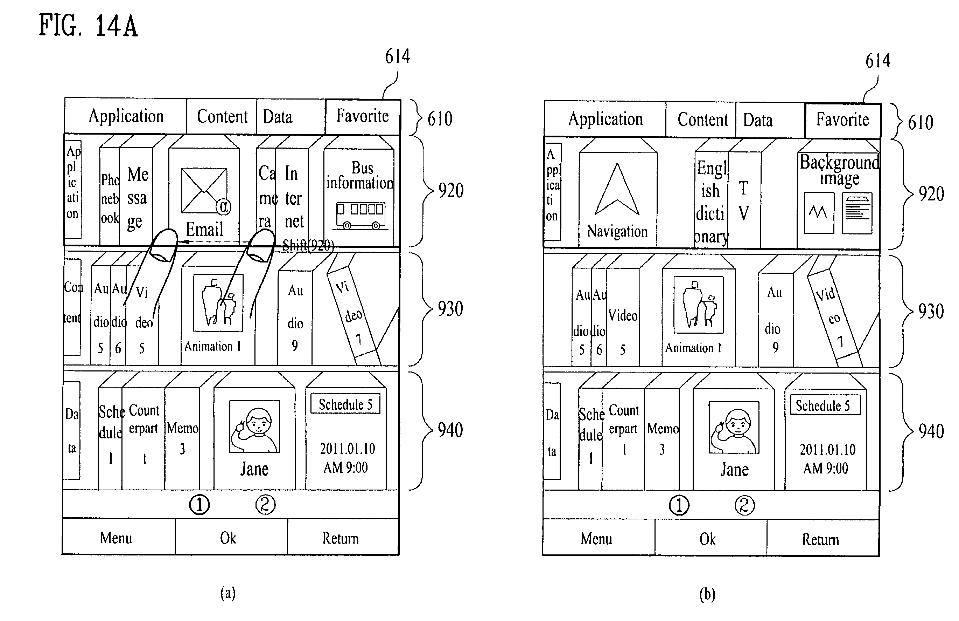

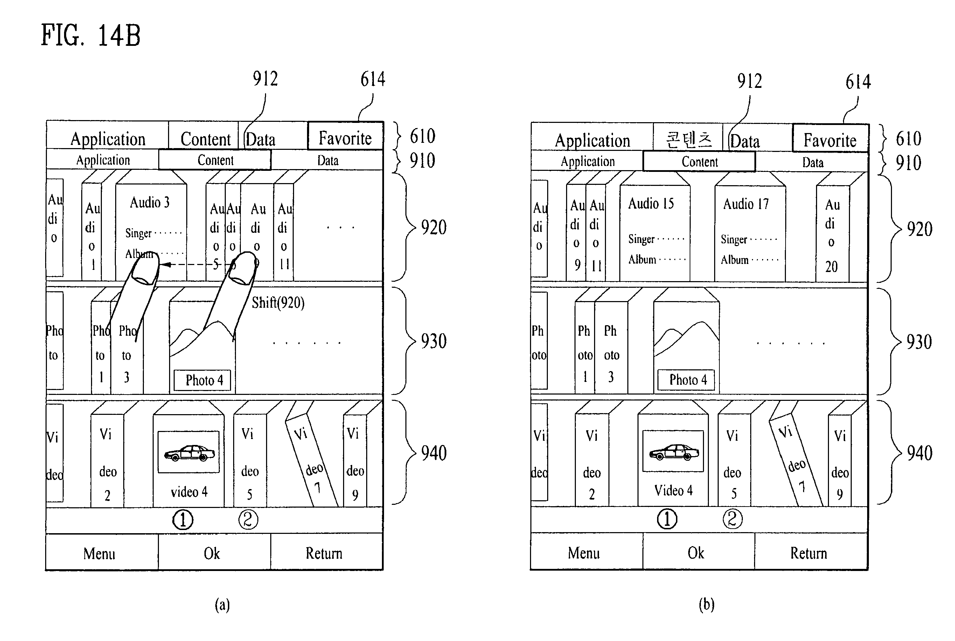

FIG. 14A and FIG. 14B are diagrams for changing an item identifier displayed on a specific line in the course of displaying item identifiers indicating user-preferred items according to the present invention.

Referring to FIG. 14A, in case of receiving an input of a left-directional touch & drag action on the first shelf 920 (i.e., application type is designated), on which application identifiers corresponding to user favorite applications are displayed, in the item identifier display state of a user favorite type [cf. FIG. 9A] [FIG. 14A (a)], the mobile terminal 100 shifts the application identifiers of a first group displayed on the first shelf 920 in the left direction and is then able to display the application identifiers of a second group situated next to the application identifiers of the first group on the first shelf 920.

Referring to FIG. 14B, in case of receiving an input of a left-directional touch & drag action on the first shelf 920 (i.e., application type is designated), on which application identifiers corresponding to user favorite applications are displayed, in the item identifier display state of a user favorite type [cf. FIG. 9B (b)] [FIG. 14B (a)], the mobile terminal 100 shifts the audio identifiers of a first group displayed on the first shelf 920 in the left direction and is then able to display the audio identifiers of a second group situated next to the audio identifiers of the first group on the first shelf 920.

According to the present invention, the mobile terminal 100 is able to receive a combination command touch action on at least two item identifiers displayed on a prescribed one of a plurality of lines from a user using the touchscreen 151.

The mobile terminal 100 groups the at least two item identifiers, to which the combination command touch action is inputted, or at least one item corresponding to the at least two item identifiers and is then able to perform an editing operation on the grouped at least two item identifiers or the corresponding item.

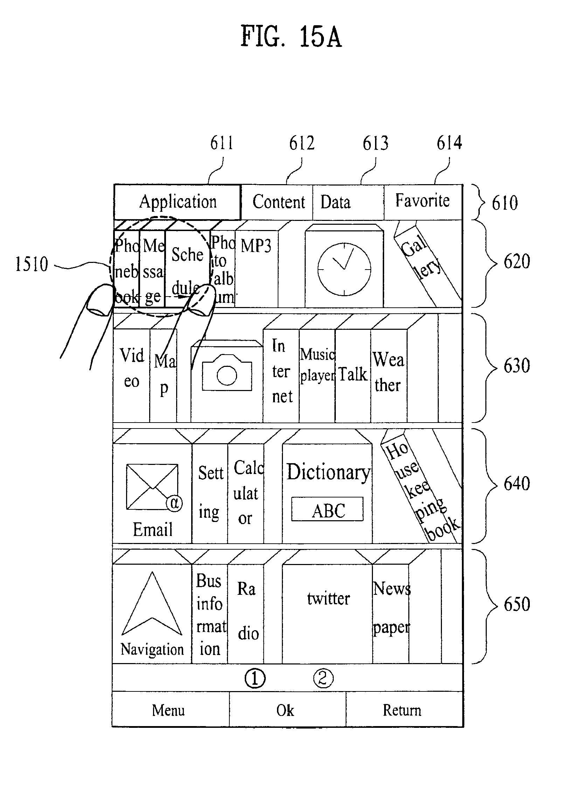

In the following description, an operation of editing a plurality of item identifiers selected by a user or a corresponding item is explained with reference to FIGs. 15A to 15F. For clarity and convenience of the following description, assume an application identifier display state is entered [cf. FIG. 6A]. Of course, the editing operation is applicable to a display state of an item identifier of a different type.

FIGs. 15A to 15F are diagrams for performing an editing action on a plurality of item identifiers or corresponding items selected by a user according to the present invention.

Referring to FIG. 15A, the mobile terminal 100 is able to receive an input of a combination command touch action on first to third application indicators displayed on the first shelf 620 from a user and is then able to combine the first to third application indicators 1510 together.

For instance, the combination command touch action can include a touch & drag action from the first application indicator to the third application indicator or a touch action on each of the first to third application indicators. Moreover, in case that a touch action for selecting a specific shelf (or a sub-shelf included in the specific shelf) is inputted as the combination command touch action, the mobile terminal 100 is able to combine all application indicators included in the specific shelf (or the sub-shelf included in the specific shelf) together.

Of course, it is not mandatory for the first to third application indicators to be displayed on the same shelf.

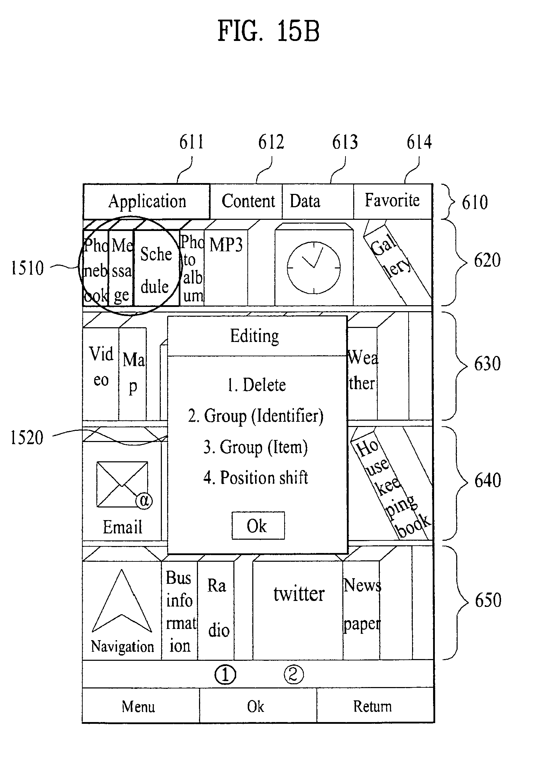

Referring to FIG. 15B, the mobile terminal 10 is able to display a list 1520 of editing operations executable on the combined first to third application indicators 1510 on the screen. For instance, the executable editing operations can include 'delete', 'position shift', 'identifier grouping [group (identifier)], item grouping [group (item)] and the like.

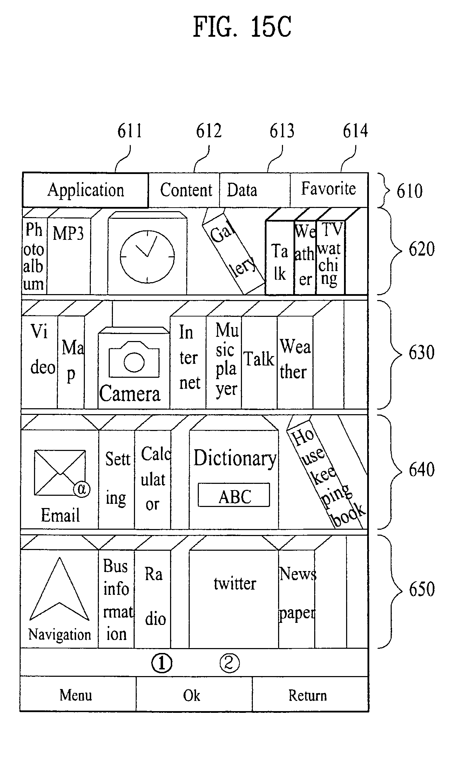

Referring to FIG. 15C, if the 'delete' is selected in FIG. 15B, the mobile terminal 100 deletes the first to third application indicators 1510 from the first shelf 620 and is then able to shift the application indicators on he first shelf 620 by the deleted display part.

Moreover, the mobile terminal 100 is able to delete the application indicator selected by the user from the first to third application indicators 1510.

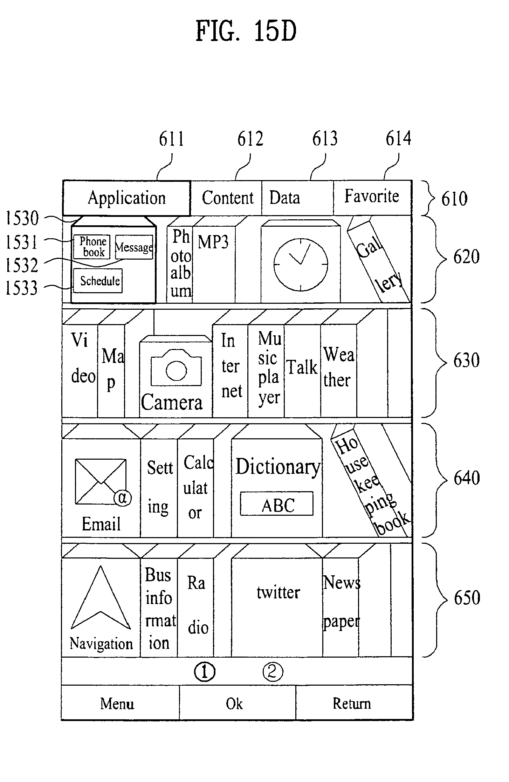

Referring to FIG. 15D, if the 'group (identifier)' is selected in Fig. 15B, the mobile terminal generates an integrated application indicator 1530 including the first to third application indicators and is then able to display the integrated application indicator 1530 on the first shelf 620.

In this case, identification information 1531 to 1533 of the first to third application indicators can be displayed on the integrated application indicator 1520.

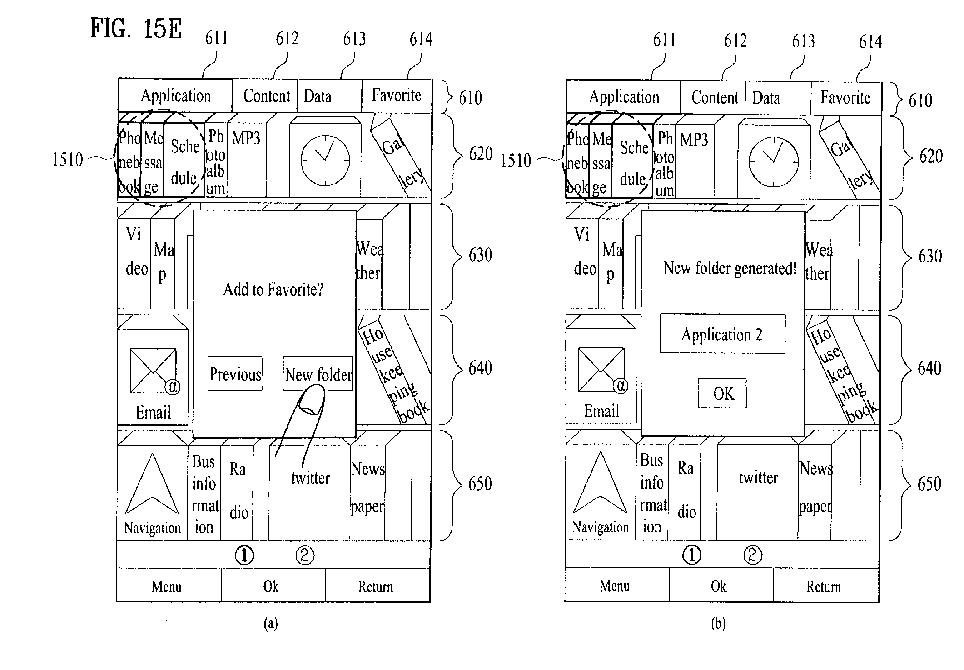

Referring to FIG. 15E, if the 'group (item)' is selected in FIG. 15B, the mobile terminal 100 generates a folder containing first to third applications respectively corresponding to the first to third application indicators [i.e., a case that 'new folder' is selected in FIG. 15E (a)] and enables the generated folder to be included in the user favorite item.

In this case, the first to third applications can be contained in a previously generated user favorite folder [i.e., a case that 'previous' is selected in FIG. 15E (a)]. Moreover, the generated folder can be managed as a separate folder if the user favorite item is not included.

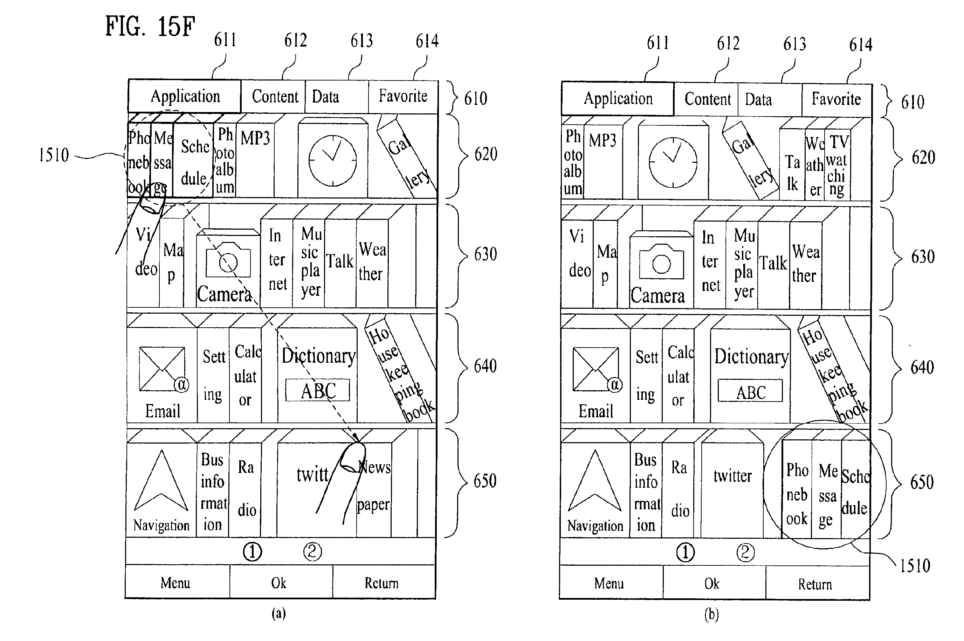

Referring to FIG. 15F, if the 'position shift' is selected in FIG. 15B, the mobile terminal 100 is able to shift a position of the first to third application indicators 1510.

In particular, if the mobile terminal 100 receives an input of a touch & drag action from the first to third application indicators 1510 to a random point of the fourth shelf 650 [FIG. 15F (a)], the mobile terminal 100 shifts the first to third application indicators 1510 to the random point of the fourth shelf 650 and then displays the shifted first to third application indicators 1510 at the random point. In doing so, due to the position shift of the first to third application indicators 1510, positions of the application indicators previously displayed on the fourth shelf 650 can be changed.

Meanwhile, the combination command touch action can differ in its touch pattern in accordance with an editing operation type (e.g., delete, position shift, identifier grouping, item grouping, etc.) [Not shown in the drawing].

According to the present invention, in case of receiving an input of a touch action on a specific item identifier displayed on a specific line, the mobile terminal 100 is able to controls a display of the specific item identifier under the control of the controller 180.

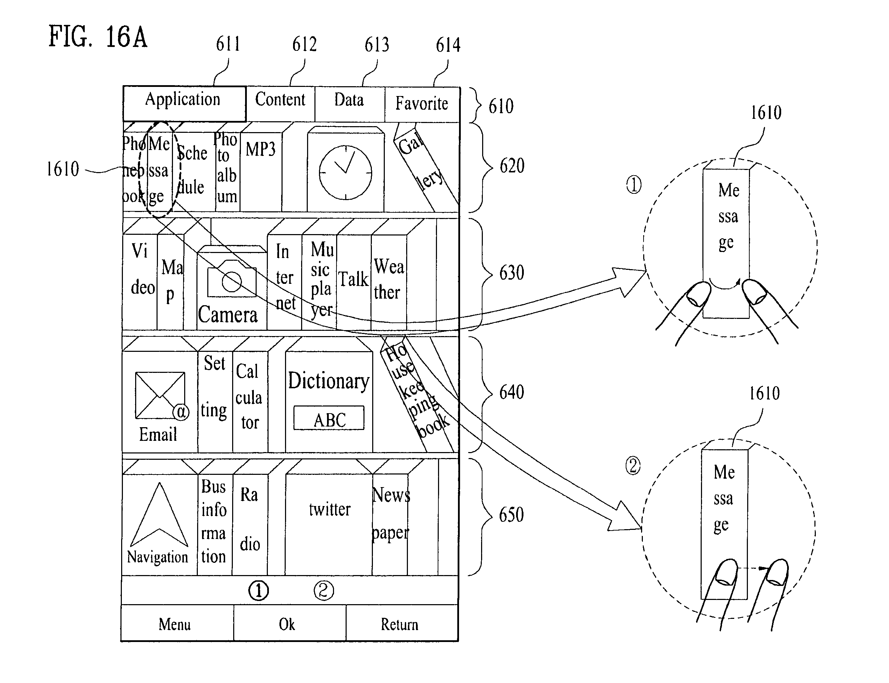

This is explained in detail with reference to FIGs. 16A to 16C as follows.

FIGs. 16A to 16C are diagram for controlling a display of an item identifier by a user manipulation according to the present invention.

Referring to FIG. 16A, the mobile terminal 100 is able to receive an input of a touch action 0,1 on a message identifier (i.e., example of an application identifier) to change a facet facing forward or a touch action 0,2 on the message identifier to adjust a size from a user.

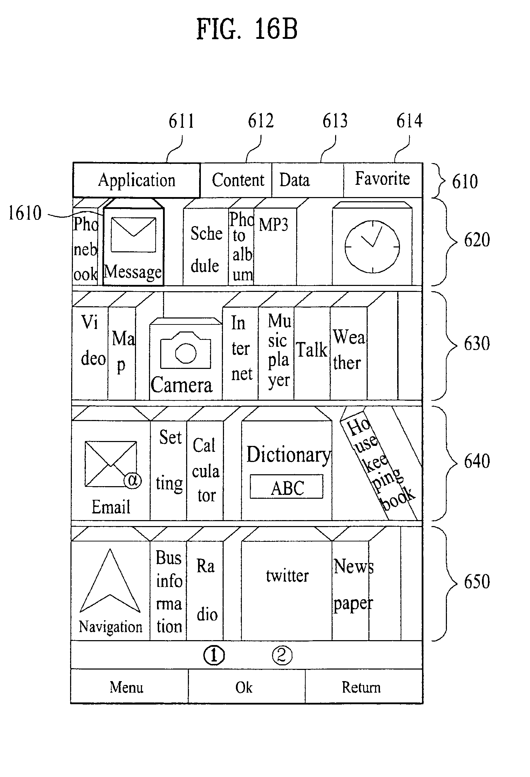

Referring to FIG. 16B, in case of receiving an input of the touch action 0,1 in FIG. 16A, the mobile terminal 100 is able to change a display direction of the message identifier 1610 to have its front side face forward.

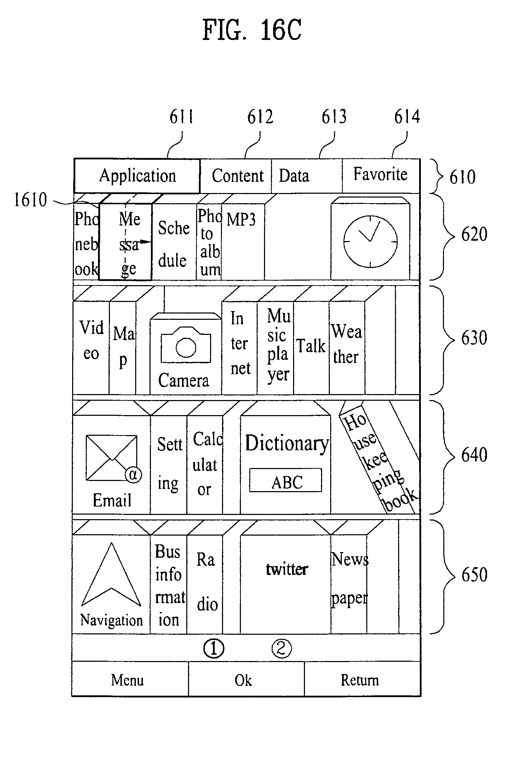

Referring to FIG. 16C, in case of receiving the touch action 0,2 in FIG. 16B, the mobile terminal 100 is able to increase or decrease a size of the message identifier 1610. In doing so, the number of the application identifiers displayed on the first shelf 610 can be incremented or decremented to correspond to the size adjustment of the message identifier 1610.

Meanwhile, using a magnification function, the mobile terminal 100 is able to enlarge and display the identification information displayed on a specific item identifier [not shown in the drawing]. In doing so, the enlarged part is shiftable to correspond to a touch point shift by a touch & drag action.

Moreover, in case of receiving a touch & drag action on a plurality of item identifiers, of which lateral sides face forward, in a first direction, the mobile terminal 100 enables the front sides of a plurality of the item identifiers to face forward. On the contrary, when the front side faces forward, if a touch & drag action is inputted in a second direction, the mobile terminal 100 enables the lateral sides of a plurality of the item identifiers to face forward.

According to the present invention, in the page shift itself or the item identifier shift within the shelf, the mobile terminal 100 is ale to display the page or shelf, which is to be shifted, in a manner of overlaying the corresponding page or shelf on a currently displayed page or shelf before completion of the shift. This enables a user to check the page item identifier, which is displayed on the page or shelf to be shifted, before the completion of the shift.

According to one embodiment of the present invention, the above-described display controlling methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

Accordingly, the present invention provides the following effects and/or advantages.

First of all, when an item identifier is configured with a plurality of facets and a relatively narrow lateral side of the item identifier is arranged to face forward, the present invention enable more item identifiers to be displayed on a single screen.

Secondly, the present invention displays at least one item identifier corresponding to each of at least one item type on a single screen, thereby providing a user with item identifiers of various item types without performing a menu switching or a screen switching.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal 100 comprising:
a touchscreen 151 displaying at least one item identifier including a plurality of facets on each of a plurality of lines, the touchscreen receiving an input of a touch & drag action on a specific one of a plurality of the lines; and
a controller 180 changing the item identifier displayed on the specific line in accordance with the input of the touch & drag action,
wherein the item identifier is arranged in a manner that a specific one of a plurality of the facets configuring the item identifier faces forward and
wherein an identification information of a corresponding item is displayed on the specific facet.

2. The mobile terminal of claim 1, wherein the item identifier indicates at least one of application, content and data.

3. The mobile terminal of any of claims 1 and 2, wherein the item identifier has a size corresponding to at least one of a volume, a substance, a use frequency and a preference of the corresponding item.

4. The mobile terminal of any of claims 1-3, wherein the identification information of the item includes a whole or partial part of at least one of a representative image and a title of the corresponding item.

5. The mobile terminal of any of claims 1-4, wherein the touchscreen displays the item identifier having an item type different per line or the item identifier having the item type different per page under the control of the controller.

6. The mobile terminal of any of claims 1-5, wherein if receiving the input of the touch & drag action, the controller shifts the at least one item identifier of a first group displayed on the specific line to correspond to a touch & drag direction and wherein the controller controls the touchscreen to display the at least one item identifier of a second group, in which the at least one item identifier of a first group is included in part or is not included at all, on the specific line.

7. The mobile terminal of claim 6, wherein if the at least one item identifier having the item type different per line is displayed before the input of the touch & drag action, the item corresponding to the item identifier of the second group has the item type equal to that of the item corresponding to the item identifier of the first group.

8. The mobile terminal of claim 6, wherein if the at least one item identifier having the item type different per page is displayed before the input of the touch & drag action, the item corresponding to the item identifier of the second group has the item type corresponding to the page different from the page displayed before the input o the touch & drag action.

9. The mobile terminal of any of claims 1-8, wherein if receiving an input of a touch & drag action for a page turning, the touchscreen displays the at last one item identifier on each of a plurality of the lines on a next page and wherein the touch & drag action on the specific line is configured to differ from the touch & drag action for the page turning in touch pattern.

10. The mobile terminal of any of claims 1-9, wherein the touchscreen receives an input of a combination command touch action on at least two item identifiers displayed on a prescribed one of a plurality of the lines and wherein if receiving the input of the combination command touch action, the controller groups the at least two item identifiers displayed on the prescribed line or at least two items corresponding to the at least two item identifiers and performs an editing operation on the grouped at least two item identifiers or the grouped at least two items.

11. The mobile terminal of any of claims 1-10, wherein the touchscreen receives the input of the touch & drag action on the at least one item identifier having a lateral side arranged to face forward on the prescribed one of a plurality of the lines, wherein the controller arranges the at least one item identifier corresponding to the input of the touch & drag action in a manner that a front side of the at least item identifier is changed to face forward, and wherein the controller controls the touchscreen to display the identification information of the arrangement changed item identifier on the front side in more detail than the case of arranging the lateral side to face forward.

12. A method of controlling a display in a mobile terminal, comprising the steps of:
displaying at least one item identifier including a plurality of facets on each of a plurality of lines;
receiving an input of a touch & drag action on a specific one of a plurality of the lines; and
changing the item identifier displayed on the specific line in accordance with the input of the touch & drag action,
wherein the item identifier is arranged in a manner that a specific one of a plurality of the facets configuring the item identifier faces forward and
wherein an identification information of a corresponding item is displayed on the specific facet.

13. The method of claim 12, wherein the displaying step comprises the step of displaying the item identifier having an item type different per line or the item identifier having the item type different per page.

14. The method of any of claims 12 and 13, further comprising the steps of:
receiving an input of a combination command touch action on at least two item identifiers displayed on a prescribed one of a plurality of the lines;
if receiving the input of the combination command touch action, grouping the at least two item identifiers displayed on the prescribed line or at least two items corresponding to the at least two item identifiers; and
performing an editing operation on the grouped at least two item identifiers or the grouped at least two items.

15. The method of any of claims 12-14, further comprising the steps of:
receiving the input of the touch & drag action on the at least one item identifier having a lateral side arranged to face forward on the prescribed one of a plurality of the lines;
arranging the at least one item identifier corresponding to the input of the touch & drag action in a manner that a front side of the at least item identifier is changed to face forward; and
displaying the identification information of the arrangement changed item identifier on the front side in more detail than the case of arranging the lateral side to face forward.
